# EUROPEAN PATENT SPECIFICATION

(11) **EP 2 904 590 B1**
(45) Date of publication and mention of the grant of the patent: **07.09.2016**
(21) Application number: 13771262.6
(22) Date of filing: 11.09.2013
(51) Int. Cl.: H04M 1/19

(54) **ACCESS CONTROL READER WITH AUDIO SPATIAL FILTERING**
LESEVORRICHTUNG FÜR EINE ZUGANGSKONTROLLE MIT AUDIORÄUMLICHER FILTERUNG
LECTEUR DE CONTRÔLE D'ACCÈS AVEC FILTRAGE AUDIO SPATIAL

(30) Priority: 05.10.2012 US 201213645820
(43) Date of publication of application: 12.08.2015
(73) Proprietor: Sensormatic Electronics LLC, Boca Raton, FL 33431 (US)
(72) Inventor: MARTIN, Walter A., Glenwherry, Ballymena Antrim BT42 4RE (GB); DONAGHY, Martin J., Belfast, Antrim BT15 4EX (GB)
(74) Representative: dompatent von Kreisler Selting Werner - Partnerschaft von Patent- und Rechtsanwälten mbB
(86) International application number: PCT/US2013/059187
(87) International publication number: WO 2014/055207

(56) References cited:
- JP-A- 2009 135 594
- US-A1- 2003 095 674

## Description

### RELATED APPLICATIONS

This application claims priority to U.S. Patent Application No. 13/645,820, filed on October 5, 2012.

### BACKGROUND OF THE INVENTION

Security systems are often implemented in schools, government buildings, and corporate offices, to list a few examples. These security systems are often comprised of cameras, one or more network video recorder(s) (or NVR), and access control readers.

The access control readers are used to enable authorized persons to access restricted areas through locked doors, for example. Generally, the access control readers read identification badges or keycards of users, access a database of validated users or keycards, compare the information read from the badge or keycard to the information in the database, and unlock the door, or not.

Recently, one trend in access control readers is to include cameras and/or microphones to capture video and audio of users interacting with the access control readers. The access control readers then transmit the captured video and audio to security personnel who are able to validate the users based on their voice and/or appearance using the access control readers as part of intercom systems. Other times the validations are performed by control systems that process the captured video and audio using facial and/or voice recognition.

The document JP 2009 135594 is describes a door intercom system equipped with a beamforming microphone that performs spatial filtering.

### SUMMARY OF THE INVENTION

Currently, most access control readers use omni-directional microphones for the detection of audio. The problem is that while the omni-direction microphones can pick up the voices of the users even when the users are not directly in front of the microphones, the omni-directional nature of the microphones also means that the microphones will detect unwanted background noise, such as rain, wind, automobile and/or airline traffic, or crowds of people talking, to list a few examples. As a result, the security personnel or control systems are not able to understand the users or verify their voices over the background noise. Moreover, often because of disabled access requirements, the readers are positioned some distance from the users' heads, exasperating the problem.

The solution here is to replace or supplement the standard omni-directional microphone in an access control reader with a beamforming microphone array. Beamforming (or spatial filtering) is a signal processing technique to selectively enhance desired components of detected sounds based on their direction relative to the microphone array. Individual microphone elements in the beamforming microphone array each detect the same sounds (e.g., the user's voice and background noises). Using signal processing algorithms, the access control reader isolates the user's voice from the background noises by determining the direction from which the voice sounds originated by analyzing the phase relationship between the sounds detected by each of the elements.

This results in an enhanced voice that is clearer with lower background noise than could be detected by an omni-directional microphone or one of the individual microphone elements in the beamforming microphone array. The enhanced sound is then transmitted from the access control reader to the security personnel and/or control system. Because the user's voice has been enhanced and the background noise has been suppressed (or eliminated), the security personnel are better able to hear and understand the user, which makes it is easier for the security personnel to validate the user. In a similar vein, the control system is also better able to perform voice recognition, when used.

In general, according to one aspect, the invention features an access control reader operation method in a security system. The method comprises detecting sounds with a beamforming microphone array of an access control reader and enhancing desired components within the sounds detected by the beamforming microphone array based on a direction of a source of the desired components.

In one embodiment, the desired components are isolated from background noise in the sounds detected by the beamforming microphone array by then determining a direction to a source of the isolated desired components by analyzing the detected sounds. In one implementation, the direction is determined by a controller of the access control reader that determines a direction from the beamforming microphone array to the source of the desired components.

In another embodiment, the direction is determined by analyzing video data captured by a camera to determine a position of the source relative to the access control reader.

In some cases, the desired components are transmitted to a control system for validation, which validates a user's voice by comparing the user's voice to a voice library of valid users and enables access to a restricted area after the user's voice is validated.

In one implementation, the beamforming microphone array is a one-dimensional array of microphone elements. In other implementations, it is a two-dimensional array of microphone elements.

In general, according to another aspect, the invention features an access control reader. The reader includes a beamforming microphone array for detecting sounds and a controller that controls the beamforming microphone array to enhance desired components within the sounds based on a direction of the sounds relative to the beamforming microphone array.

In general, according to still another aspect, the invention features a security system that includes an access control reader having a beamforming array for detecting sounds. The security system further includes a controller that controls the beamforming array of the access control reader to enhance a user's voice within the detected sounds based on a direction of the voice relative to the beamforming microphone array and a control system that receives the enhanced voice of the user via a communications network.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
Fig. 1A is a hybrid block and schematic diagram illustrating a security system that includes an access control reader with a one dimensional beamforming microphone array.
Fig. 1B is a hybrid block and schematic diagram illustrating an alternative embodiment of the access control reader with a two dimensional beamforming microphone array.
Fig. 2 is a block diagram illustrating the components of the access control reader.
Fig. 3A is a flowchart showing the steps performed by the access control reader to determine a user's direction relative to the access control reader based on their voice and transmit the user's enhanced voice to security personnel.
Fig. 3B is a flowchart showing the steps performed by the access control reader to determine a user's direction relative to the access control reader based on their voice and transmit the user's enhanced voice to a control system that performs voice recognition.
Fig. 4A is a flowchart showing the steps performed by the access control reader to determine a user's direction relative to the access control reader based on facial detection from video data captured by a camera and transmit the user's enhanced voice to security personnel.
Fig. 4B is a flowchart showing the steps performed by the access control reader to determine a user's direction relative to the access control reader based on facial detection from video data captured by a camera and transmit the user's enhanced voice to a control system that performs voice recognition.

### DETAILED DESCRIPTION OF THE PREFERRED EMBODIMENTS

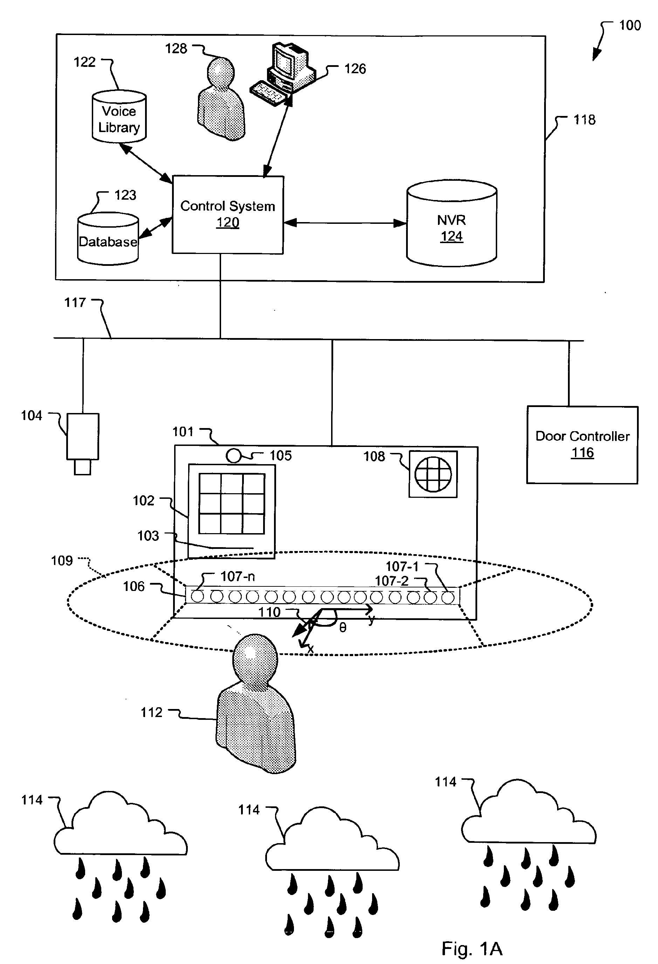

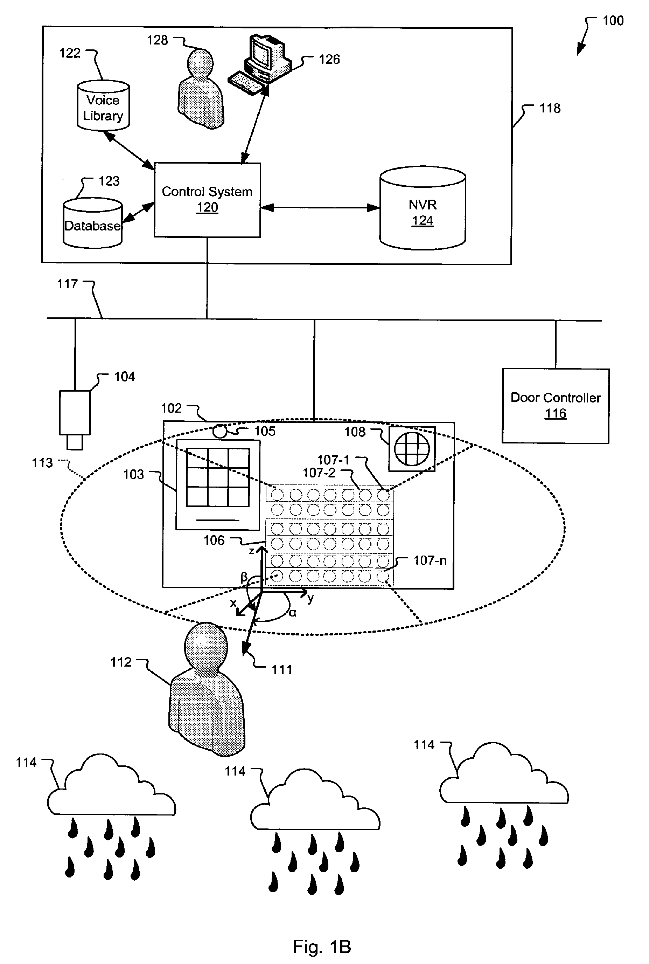

Figs. 1A and 1B show different embodiments of security systems 100 including access control readers 101, which have been constructed according to the principles of the present invention.

In the illustrated embodiments, the access control readers 101 each include a keypad or touch screen 102, a card reader 103, an integrated camera 105, a speaker 108, and a beamforming microphone array 106.

The keypad or touch screens 102 provide an interface between a user 112 and the access control readers 101. In the illustrated embodiments, the keypads 102 are numeric keypads that enable users to enter a security code or dial an extension or phone number, for example.

In an alternative embodiment, the keypads 102 are touch screen interfaces, which can be numeric or alpha-numeric. In still another alternative embodiment, the keypads 102 are replaced by a single button that automatically dials a predefined phone number.

The card readers 103 are provided to read an identification badge or keycard of the users 112. In one implementation, the card readers 103 use radio frequency identification (RFID) technology to read a RFID tag embedded within the identification badge or keycard of the users 112. The RFID tag is linked to information stored in a database 123 that is used to validate, or not, the tag. In an alternative embodiment, the card reader 103 reads a magnetic strip affixed to the identification badge or keycard.

The access control readers 101 preferably further include integrated cameras 105 to capture video from in front of the access control readers 101. In a typical implementation, the integrated camera 105 captures video data in real time as a live feed. However, in alternative embodiments, the integrated camera 105 captures still images at predefined intervals. In another alternative embodiment, the integrated camera 105 begins to record and transmit video data after being activated by the user 112.

There are many different options for cameras and lenses that are used in different implementations. For example, there are cameras that capture video data in black and white, color, infrared, or utilize night vision technology to operate in low light situations. Similarly, there are different types of lenses such as fish-eye, wide angle, panoramic, and macro, to list a few examples. Additionally, cameras may also record in high definition (HD) and/or standard definition.

In a one implementation, the access control readers 101 and integrated cameras 105 use a facial detection algorithm to identify when a user is in front of the access control reader and to determine a direction (e.g. reference numerals 110 and 111 in Figs. 1A and 1B, respectively) to the users 112 relative to the access control readers 101.

In an alternative embodiment, the access control readers 101 determine a direction 110, 111 to the users 112 with the beamforming microphone array 106. The beamforming microphone array 106 is comprised of microphone elements 107-1 to 107-n.

Referring to Fig. 1A, the beamforming microphone array 106 is a one dimensional array of microphone elements 107-1 to 107-n, which creates a two dimensional speech zone 109. The speech zone 109 refers to the area in front of the access control reader 101 in which sounds are detected by the microphone elements 107-1 to 107-n. In the illustrated embodiment, the beamforming microphone array 106 determines a direction 110 (at angle theta (θ)) to the user 112 relative to the access control reader 101 in the "x-y" plane, which extends horizontally.

The individual microphone elements 107-1 to 107-n of the beamforming microphone array 106 each detect the same sounds (e.g., the user's voice and background noise). Using signal processing algorithms, the access control reader 101 determines a direction to the user and then isolates the user's voice from the background sounds in the detected sounds. The access control readers 101 then combine the user's voices from the individual microphone elements 107-1 to 107-n to generate enhanced sound audio data. Any unwanted background noise is reduced or filtered out. Generally, the unwanted noise is background noise that originates from directions other than the direction 110 to the user 112.

Referring to Fig. 1B, the operation of the access control reader 101 is almost identical. In this embodiment, however, the beamforming microphone array 106 is a two dimensional array that creates a three dimensional speech zone 113. In this embodiment, the beamforming microphone array 106 is able detect sound and to determine a direction 111 to the user 112 relative to the access control reader 101 in the "x-y" and "x-z" planes. Generally, this embodiment is able to resolve the direction to the user both horizontally and vertically.

In the illustrated embodiment, the access control reader 101 determines a direction (at angles alpha (α) and beta (β)) 111 to the user 112 relative to the access control reader 101. Alpha (α) is the angle to the user 112 relative to the access control reader 101 in the "x-y" plane. Beta (β) is the angle to the user 112 relative to the access control reader 101 in the "x-z" plane.

Referring again to both Figs. 1A and 1B, the algorithms to determine the direction 110, 111 to the user 112 are constantly updating the direction to the user. This ensures that the user's voice is always enhanced even if the user 112 moves around while speaking.

Additionally, while the illustrated embodiment only depicts one example of background noise 114, the access control readers 101 are able filter out many different background noises 114 such as wind, automobile and airplane traffic, or crowds of people talking, to list a few examples, when the noise originates from a direction other than the direction to the user 110, 111.

The access control readers 101 further include speakers 108. Together, the speakers 108 and beamforming microphone arrays 106 create an intercom system. In a typical security system, the security personnel 128 will need to communicate with the users 112 as part of the validation process. The speakers 108 enable the users to hear communications sent from the security personnel 128.

In the illustrated embodiment, the access control readers 101 are connected to external cameras 104 and door controllers 116 via communications networks 117 or bus. Alternatively, the access control readers 101 are connected to additional security components such as fire alarms, police alarms, or motion sensors that are implemented as part of the security system 100. The communications network 117 is typically a private or public data network, or combinations of both.

In one embodiment, the access control readers 101 and/or cameras 104,105 have analytical capabilities that are able to track moving objects. An example of a system and method for monitoring the movements of objects is described in, "Method and System for Monitoring Portal to Detect Entry and Exit" by Westmacott et al., filed February 07, 2012 (U.S. Patent Application No. 13/367,770). Additionally, alternative embodiments may also implement facial recognition software that is able to use biometrics (or biometric information) to identify the user 112.

In the illustrated embodiment, the access control readers 101 and control systems 120 are connected to door controllers 116 that unlock locked doors for validated users. After receiving an instruction from the access control reader 101 or from the control system 120, the door controller 116 unlocks a locked door for a predefined length of time to enable the user 112 to access to the restricted area, in one example. After the predefined length of time expires, the door controllers 116 automatically relock the doors to prevent unauthorized persons from accessing the restricted area. In an alternative embodiment, the access control readers 101 and door controllers 116 are part of a single integrated device.

The control system 120 is typically housed within a security room 118. Generally, the security room is an office within an office building. However, the security room 118 could also be security booth or a computer terminal within the office building, for example.

In one embodiment, the security system 100 is monitored and controlled by security personnel 128 with a security personnel computer 126. In the illustrated example, the security personnel 128 is at least one security guard. In alternative embodiments, the security personnel could be a team of security guards. In an alternative embodiment, the security system 100 is operated automatically by the control system 120.

The control systems 120 are connected to network video recorders (NVR) 124, voice libraries 122, and databases 123, in some embodiments. The NVRs store the audio and video data captured by the beamforming microphone array 106, integrated camera 105, and external camera 104. A time and date are associated with the captured audio and video to allow the data to be indexed and reviewed at a later date. The voice library 122 stores previously recorded samples of user voices. These samples are compared to the captured audio data detected by the beamforming array 106. The database 123 stores information about users that is presented to the security personnel computer 126 (or control system 120) when the user 112 activates the access control reader 101. The database typically stores information such as a name, date of birth, occupation, a department and/or company, and an image of the user, to list a few examples.

By way of example, after the card reader 103 of the access control reader 101 reads an identification badge or keycard, the control system 120 retrieves the user's information from the database 123. The user's information is then displayed on the security personnel computer 126 to provide the security guard 128 with information about the user 112 during the validation process.

In an alternative embodiment, the validation process is automated. In this scenario, the control system 120 compares the captured audio and video data from the access control reader 101 to the information in the voice library 122. Using voice recognition algorithms, the control system 120 determines if the voice of the user matches the previously recorded samples stored in the voice library 122.

In still other embodiments, the control system 120 uses other biometric information such as facial recognition, retinal scans, and/or fingerprint information to determine the user's identity. In this embodiment, the biometric information of the user 112 acquired by the access control reader is compared to previously recorded biometric information stored in the database 123.

If the user is validated, then the door controller 116 is instructed (by the security personnel 128 or the control system 120) to unlock the locked door. If the user is not validated, then the user may be given another opportunity to be validated. Alternatively, the security personnel 128 may notify law enforcement agencies or additional security personnel may be dispatched to the location of the access control reader 101.

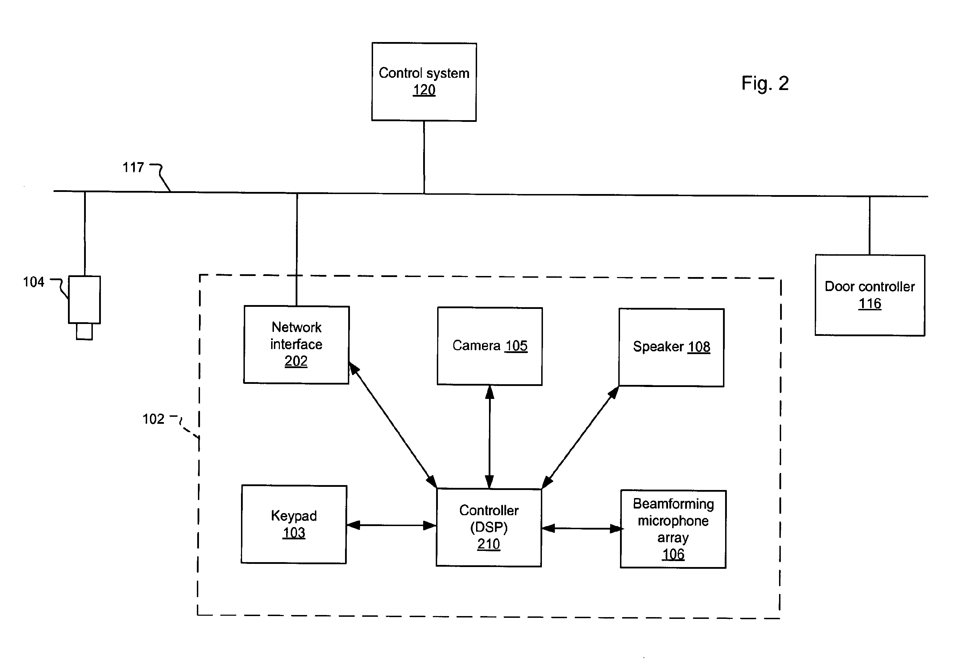

Fig. 2 is a block diagram of the access control reader 101 in one embodiment. The access control reader 101 includes a controller 210 and a network interface 202. The controller 210 is a digital signal processor (DSP) in one example. It controls the operations of the different components of the access control reader 101. For example, the controller 210 interprets the inputs received by the keypad 102 and/or card reader 103 and instructs the integrated camera 105 where to focus when capturing video data. Additionally, the controller 210 determines the direction 110, 111 to the user 112 and processes the audio data from the beamforming microphone array to enhance the user's voice detected by the beamforming microphone array 106.

The controller 210 is connected to the network interface 202. The network interface 202 connects the access control reader 101 to control system 120 (and security room 118) as well as the additional security components (e.g., 104, 116 in Figs 1A and 1B) via the communication network 117.

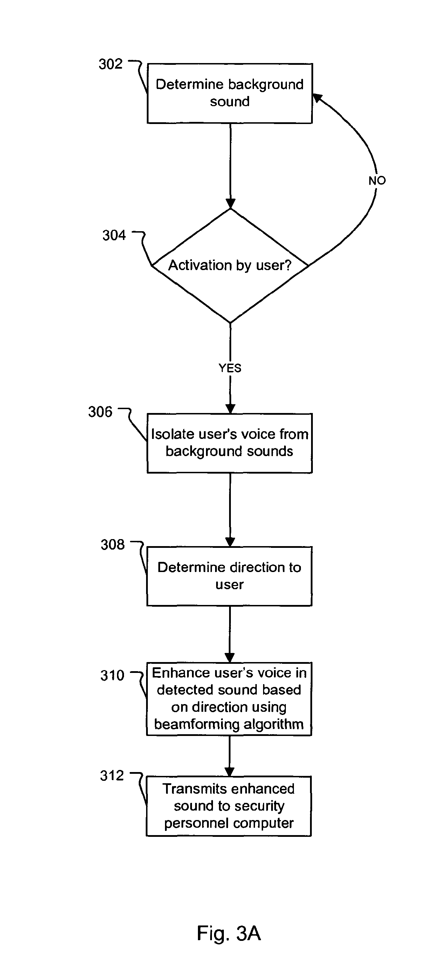

Fig. 3A is a flowchart showing the steps performed by the access control reader 101 to determine a user's direction relative to the access control reader 101 based on their voice and then transmit the user's enhanced voice to security personnel 128.

In the first step 302, the controller 210 of the access control reader 101 monitors background sounds. This determination of the background sounds provides a baseline assessment of the typical background noise in the area surrounding the access control reader 101. The baseline assessment of the background noise provides an initial measurement.

In the next step 304, the controller 210 of the access control reader 101 determines if the user 112 activated the access control reader 101. In one embodiment, the user 112 activates the access control reader 101 by interacting with keypad or card reader (see reference numerals 102 and 103 in Figs. 1A and 1B) and then speaking to the access control reader 101. In an alternative embodiment, activation of the access control reader 101 occurs automatically whenever the user 112 begins to speak to the access control reader from within the speech zone (see reference numerals 109, 113 in Figs. 1A and 1B, respectively) by using the background noise as a reference.

If the access control reader 101 is activated by the user 112, then the access control reader 101 isolates the voice of the user 112 from the background sound in step 306.

In the next step 308, the access control reader 101 determines a direction to the user relative to the access control reader 101. Next, in step 310, the access control reader 101 enhances the user's voice in the detected sounds based on the direction to the user 112 using a beamforming or spatial filtering.

In the next step 312, the access control reader 101 transmits the enhanced sound (e.g., the user's voice) to the security personnel computer 126.

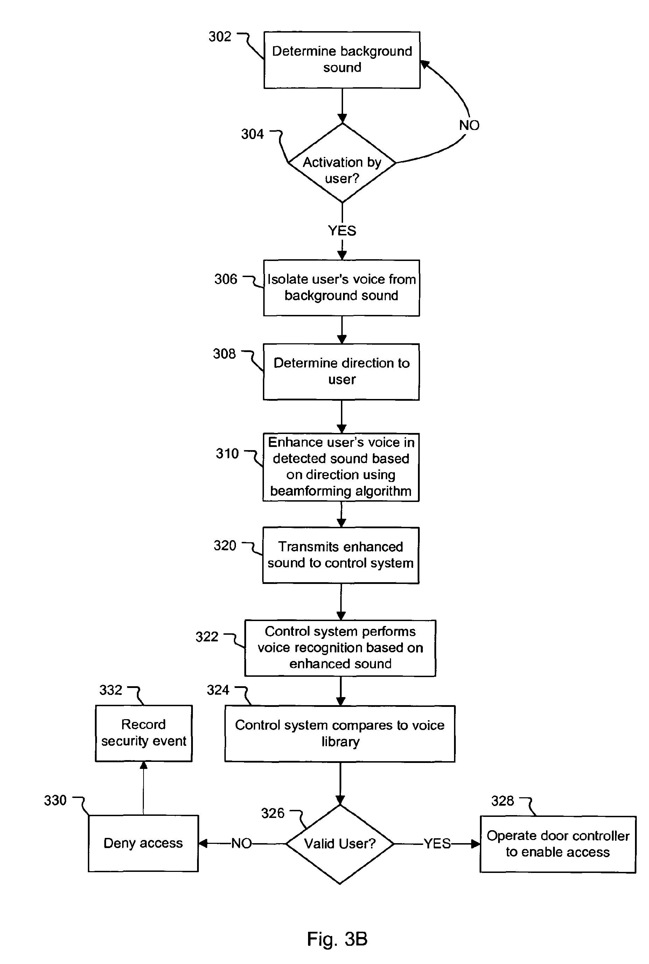

Fig. 3B is a flowchart showing the steps performed by the access control reader 101 to determine a user's direction relative to the access control reader 101 based on their voice and transmits the user's enhanced voice to a control system that performs voice recognition.

Steps 302 through 310 are the same as previously described for Fig. 3A. Then, in step 320, the access control reader 101 transmits the enhanced sound to the control system 120 for analysis.

In the next step, 322, the control system 120 performs voice recognition based on the enhanced sound. In one example, in step 324, the control system 120 compares the enhanced sound to previously recorded audio data stored in the voice library 122.

In the next step 326, the control system 120 determines if the user 112 is valid. If the user 112 is valid, then the control system 120 operates the door controller 116 to unlock a locked door and enable access to the restricted area in step 328. If the user 112 is not valid, then control system 120 denies access to the user 112 in step 330. Then, the control system 120 records a security event of the failed validation, in step 332, in one example. A time and date are associated with the failed validation to provide a record of the failed attempt. Typically, the security events are also reviewed at a later date by accessing the NVR 124 to determine if the failed validation attempt was accidental or was an attempt to breach the security system.

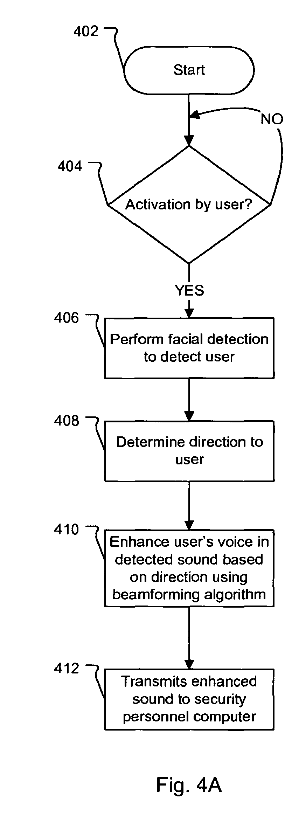

Fig. 4A is a flowchart showing the steps performed by the access control reader 101 to determine a user's direction relative to the access control reader 101 based on facial detection from video data captured by a camera (e.g. 105 in Figs. 1A and 1B) and transmit the user's enhanced voice to security personnel 128.

In the first step 404, the access control reader 101 determines if the access control reader 101 is activated by the user 112. If the access control reader 101 has not been activated, then the access control reader 101 continues to wait for activation.

If the access control reader 101 is activated by the user 112, then the integrated camera 105 of the access control reader 101 performs facial detection to detect the user 112 in step 406. In the next step 408, the access control reader 101 determines a direction to the user (e.g., 110 and 111 in Figs 1A and 1B, respectively) relative to the access control reader 101.

Next, in step 410, the access control reader 101 enhances the user's voice in the detected sound based on the direction to the user 112 using the beamforming or spatial filtering executed by the controller 210. The enhanced sound is then transmitted to the security personnel in step 412.

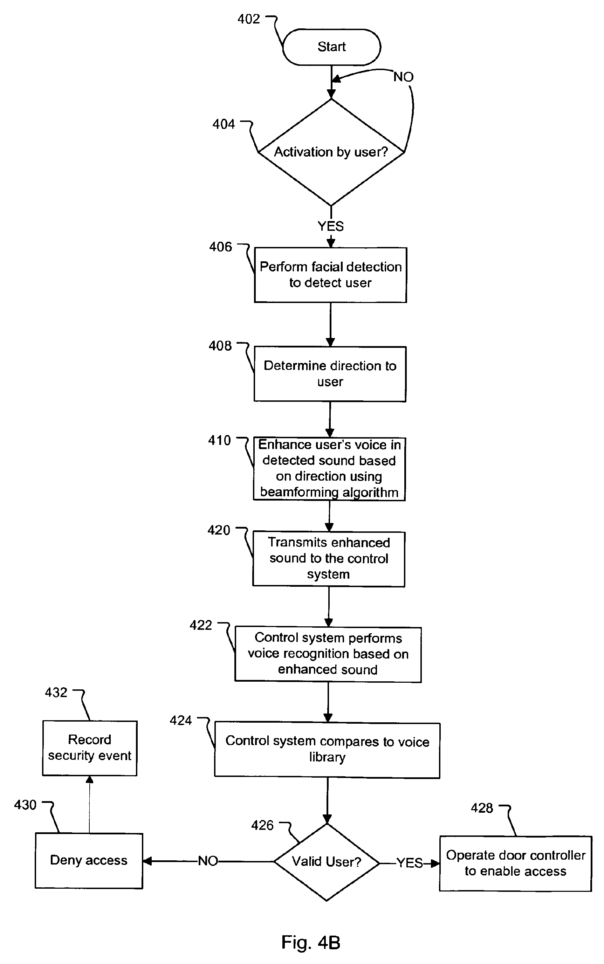

Fig. 4B is a flowchart showing the steps performed by the access control reader 101 to determine a user's direction relative to the access control reader based on facial detection from video data captured by a camera and forward the user's enhanced voice to a control system that performs voice recognition.

Steps 402 to 410 are the same as described for Fig. 4A.

Then, in step 420 the access control reader 101 transmits the enhanced sound to the control system 120 to be analyzed.

In the next step, 422, the control system 120 performs voice recognition based on the enhanced sound. In one example, in step 424, the control system 120 compares the enhanced sound to previously recorded audio data stored in the voice library 122.

In the next step 426, the control system 120 determines if the user 112 is valid. If the user 112 is valid, then the control system 120 operates the door controller 116 to unlock a locked door and enable access to the restricted area in step 428.

If the user 112 is not valid, then control system 120 denies access to the user 112 in step 430. Next, the control system 120 records a security event of the failed validation, in step 432.

While this invention has been particularly shown and described with references to preferred embodiments thereof, it will be understood by those skilled in the art that various changes in form and details may be made therein without departing from the scope of the invention encompassed by the appended claims.

## Claims

1. An access control reader operation method in a security system, the method comprising:
detecting sounds with a beamforming microphone array (106) of an access control reader (101, 102); and
enhancing desired components within the sounds detected using the beamforming microphone array by isolating the desired components from background noise in the sounds detected by the beamforming microphone array and determining the direction (110, 111) to a source (112) of the isolated desired components in the detected sounds.

2. The method according to claim 1, wherein the desired components in the sounds are isolated from background noise with spatial filtering.

3. The method according to claim 1, wherein the direction is determined by a controller (210) of the access control reader that determines the direction from the beamforming microphone array to the source of the desired components.

4. The method according to claim 1, wherein the direction is determined by analyzing video data captured by a camera (105) to determine a position of the source relative to the access control reader.

5. The method according to any one of claims 1-4, further comprising transmitting the desired components to a control system for validation; and the control system validates a user's voice by comparing the user's voice to a voice library of valid users and enables access to a restricted area after the user's voice is validated.

6. The method according to any one of claims 1-5, wherein the beamforming microphone array is a one-dimensional array of microphone elements.

7. The method according to claim 6, wherein the one-dimensional array of microphone elements resolves a two-dimensional speech zone to detect the sounds.

8. The method according to any one of claims 1-5, wherein the beamforming microphone array is a two-dimensional array of microphone elements.

9. An access control reader (101, 102), comprising:
a beamforming microphone array (106) for detecting sounds; and
a controller (210) that enhances desired components within the sounds detected using the beamforming microphone array by determining a direction of the desired components within the sounds relative to the beamforming microphone array.

10. The access control reader according to claim 9, wherein the beamforming microphone array is a two-dimensional array of microphone elements.

11. The access control reader according to claim 9, wherein the beamforming microphone array is a one-dimensional array of microphone elements.

12. The access control reader according to any one of claims 9-11, wherein the desired components are isolated from background noise detected by the beamforming microphone array via spatial filtering.

13. The access control reader according to any one of claims 9-12, further comprising a camera to record video data in front of the beamforming microphone array.

14. The access control reader according to claim 13, wherein the video data recorded by the camera is analyzed to determine a direction to a source of the desired components.

15. A security system, comprising:
an access control reader according to claim 9; and
a control system that receives the enhanced voice of the user via a communications network and validates the enhanced voice by comparing the enhanced voice to a voice library of valid users and then enables access to a restricted area after the user has been validated.

## Patentansprüche

1. Verfahren für den Betrieb eines Zugangskontrolllesegeräts in einem Sicherheitssystem, wobei das System aufweist:
das Detektieren von Geräuschen mittels einer Beamforming-Mikrofonanordnung (106) eines Zugangskontrolllesegeräts (101, 102); und
das Verbessern gewünschter Komponenten in den mittels der Beamforming-Mikrofonanordnung detektierten Geräuschen durch Isolieren der gewünschten Komponenten von Hintergrundgeräuschen in den mittels der Beamforming-Mikrofonanordnung detektierten Geräusche und Bestimmen der Richtung (110, 111) einer Quelle (112) der isolierten gewünschten Komponenten in den detektierten Geräuschen.

2. Verfahren nach Anspruch 1, bei welchem die gewünschten Komponenten in den Geräuschen durch räumliches Filtern von Hintergrundgeräuschen isoliert werden.

3. Verfahren nach Anspruch 1, bei welchem die Richtung durch einen Controller (210) des Zugangskontrolllesegeräts bestimmt wird, welcher die Richtung von der Beamforming-Mikrofonanordnung zu der Quelle der gewünschten Komponenten bestimmt.

4. Verfahren nach Anspruch 1, bei welchem die Richtung durch Analysieren von Videodaten bestimmt wird, welche von einer Kamera (105) erfasst werden, um die Position der Quelle in Bezug zu dem Zugangskontrolllesegerät zu bestimmen.

5. Verfahren nach einem der Ansprüche 1-4, ferner mit dem Senden der gewünschten Komponenten an ein Kontrollsystem zur Validierung; und wobei das Kontrollsystem eine Benutzerstimme validiert, indem sie die Benutzerstimme mit einer Stimmenbibliothek gültiger Benutzer vergleicht und den Zugang zu einem Sperrbereich nach der Validierung der Benutzerstimme ermöglicht.

6. Verfahren nach einem der Ansprüche 1-5, bei welchem die Beamforming-Mikrofonanordnung eine eindimensionale Anordnung von Mikrofonelementen ist.

7. Verfahren nach Anspruch 6, bei welchem die eindimensionale Anordnung von Mikrofonelementen eine zweidimensionale Sprachzone auflöst, um die Geräusche zu detektieren.

8. Verfahren nach einem der Ansprüche 1-5, bei welchem die Beamforming-Mikrofonanordnung eine zweidimensionale Anordnung von Mikrofonelementen ist.

9. Zugangskontrolllesegerät (101, 102) mit:
einer Beamforming-Mikrofonanordnung (106) zum Detektieren von Geräuschen; und
einem Controller (210), der gewünschte Komponenten in den mittels der Beamforming-Mikrofonanordnung detektierten Geräuschen verbessert, indem er eine Richtung der gewünschten Komponenten in den Geräuschen in Bezug auf die Beamforming-Mikrofonanordnung bestimmt.

10. Zugangskontrolllesegerät nach Anspruch 9, bei welchem die Beamforming-Mikrofonanordnung eine zweidimensionale Anordnung von Mikrofonelementen ist.

11. Zugangskontrolllesegerät nach Anspruch 9, bei welchem die Beamforming-Mikrofonanordnung eine eindimensionale Anordnung von Mikrofonelementen ist.

12. Zugangskontrolllesegerät nach einem der Ansprüche 9-11, bei welchem die gewünschten Komponenten durch räumliches Filtern von durch die Beamforming-Mikrofonanordnung detektierten Hintergrundgeräuschen isoliert werden.

13. Zugangskontrolllesegerät nach einem der Ansprüche 9-12, ferner mit einer Kamera zum Aufzeichnen von Videodaten vor der Beamforming-Mikrofonanordnung.

14. Zugangskontrolllesegerät nach Anspruch 13, bei welchem die von der Kamera aufgezeichneten Videodaten analysiert werden, um eine Richtung zu der Quelle der gewünschten Komponenten zu bestimmen.

15. Sicherheitssystem mit:
einem Zugangskontrolllesegerät nach Anspruch 9; und
einem Kontrollsystem, das die verbesserte Stimme des Benutzers über ein Kommunikationsnetzwerk empfängt und die verbesserte Stimme validiert, indem es die verbesserte Stimme mit einer Stimmenbibliothek gültiger Benutzer vergleicht und danach den Zugang zu einem Sperrbereich nach der Validierung der Benutzerstimme ermöglicht.

## Revendications

1. Procédé de fonctionnement d'un lecteur de contrôle d'accès dans un système de sécurité, le procédé comprenant :
la détection de sons avec un réseau de microphones à formation de faisceaux (106) d'un lecteur de contrôle d'accès (101, 102) ; et
l'amélioration de composantes souhaitées au sein des sons détectés à l'aide du réseau de microphones à formation de faisceaux en isolant les composantes souhaitées du bruit de fond dans les sons détectés par le réseau de microphones à formation de faisceaux et en déterminant la direction (110, 111) vers une source (112) des composantes souhaitées isolées dans les sons détectés.

2. Procédé selon la revendication 1, dans lequel les composantes des sons souhaitées sont isolées du bruit de fond avec un filtrage spatial.

3. Procédé selon la revendication 1, dans lequel la direction est déterminée par un contrôleur (210) du lecteur de contrôle d'accès qui détermine la direction depuis le réseau de microphones à formation de faisceaux jusqu'à la source des composantes souhaitées.

4. Procédé selon la revendication 1, dans lequel la direction est déterminée en analysant des données vidéo capturées par une caméra (105) pour déterminer une position de la source par rapport au lecteur de contrôle d'accès.

5. Procédé selon l'une quelconque des revendications 1-4, comprenant en outre la transmission des composantes souhaitées à un système de contrôle en vue d'une validation ; et le système de contrôle valide la voix d'un utilisateur en comparant la voix de l'utilisateur à une bibliothèque vocale d'utilisateurs valides et autorise l'accès à une zone d'accès restreint une fois que la voix de l'utilisateur a été validée.

6. Procédé selon l'une quelconque des revendications 1-5, dans lequel le réseau de microphones à formation de faisceaux est un réseau unidimensionnel d'éléments vibrants.

7. Procédé selon la revendication 6, dans lequel le réseau unidimensionnel d'éléments vibrants résout une zone vocale bidimensionnelle pour détecter les sons.

8. Procédé selon l'une quelconque des revendications 1-5, dans lequel le réseau de microphones à formation de faisceaux est un réseau bidimensionnel d'éléments vibrants.

9. Lecteur de contrôle d'accès (101, 102), comprenant :
un réseau de microphones à formation de faisceaux (106) destiné à détecter des sons ; et
un contrôleur (210) qui améliore les composantes souhaitées au sein des sons détectés à l'aide du réseau de microphones à formation de faisceaux en déterminant une direction des composantes souhaitées au sein des sons par rapport au réseau de microphones à formation de faisceaux.

10. Lecteur de contrôle d'accès selon la revendication 9, dans lequel le réseau de microphones à formation de faisceaux est un réseau bidimensionnel d'éléments vibrants.

11. Lecteur de contrôle d'accès selon la revendication 9, dans lequel le réseau de microphones à formation de faisceaux est un réseau unidimensionnel d'éléments vibrants.

12. Lecteur de contrôle d'accès selon l'une quelconque des revendications 9-11, dans lequel les composantes souhaitées sont isolées du bruit de fond détecté par le réseau de microphones à formation de faisceaux via un filtrage spatial.

13. Lecteur de contrôle d'accès selon l'une quelconque des revendications 9-12, comprenant en outre une caméra pour enregistrer des données vidéo devant le réseau de microphones à formation de faisceaux.

14. Lecteur de contrôle d'accès selon la revendication 13, dans lequel les données vidéo enregistrées par la caméra sont analysées pour déterminer une direction vers une source des composantes souhaitées.

15. Système de sécurité, comprenant :
un lecteur de contrôle d'accès selon la revendication 9 ; et
un système de commande qui reçoit la voix améliorée de l'utilisateur via un réseau de communication et valide la voix améliorée en comparant la voix améliorée avec une bibliothèque vocale d'utilisateurs valides et autorise ensuite l'accès à une zone d'accès restreint une fois que l'utilisateur a été validé.
